Europäisches Patentamt

European Patent Office

Office européen des brevets

(11) Veröffentlichungsnummer: **0 079 520**
**B1**

(12) **EUROPÄISCHE PATENTSCHRIFT**

(45) Veröffentlichungstag der Patentschrift:
14.12.88

(21) Anmeldenummer: **82110111.0**

(22) Anmeldetag: **03.11.82**

(51) Int. Cl.⁴: **C 08 J 5/18,** B 29 D 7/00,
C 08 L 23/10

(54) **Biaxial gestreckte polyolefinische Kunststoffolie mit einem Elastizitätsmodul in Längsrichtung von mehr als 4 000 N/mm2.**

(30) Priorität: **12.11.81 DE 3144912**

(43) Veröffentlichungstag der Anmeldung:
**25.05.83 Patentblatt 83/21**

(45) Bekanntmachung des Hinweises auf die Patenterteilung:
**14.12.88 Patentblatt 88/50**

(84) Benannte Vertragsstaaten:
**BE DE FR GB IT LU NL**

(56) Entgegenhaltungen:
**DE-A-1 259 091**
**DE-A-1 504 606**
**FR-A-2 106 633**
**FR-A-2 374 358**
**US-A-3 937 762**

(73) Patentinhaber: **HOECHST AKTIENGESELLSCHAFT,**
**Postfach 80 03 20, D-6230 Frankfurt am Main 80**
**(DE)**

(72) Erfinder: **Janocha, Siegfried, Dr., Am Hohen Stein**
**6, D-6200 Wiesbaden (DE)**
Erfinder: **Hensel, Hartmut, Dr., Am Roten Berg 2,**
**D-6229 Schlangenbad 3 (DE)**
Erfinder: **Crass, Günter, Bachstrasse 7, D-6204**
**Taunusstein 4 (DE)**

EP 0 079 520 B1

**Beschreibung**

Biaxial gestreckte polyolefinische Kunststoffolie mit einem Elastizitätsmodul in Längsrichtung von mehr als 4000 N/mm²

Die vorliegende Erfindung betrifft eine Kunststoffolie aus Polyolefin mit einem verbesserten Elastizitätsmoduls in Längsrichtung sowie ein Verfahren zu deren Herstellung.

Die Optimierung der mechanischen Eigenschaften von Kunststoffolien, insbesondere die Verbesserung des Elastizitätsmoduls in Längsrichtung, sind seit jeher Gegenstand intensiver Bemühungen, weil diese in unmittelbarem Zusammenhang mit den anwendungstechnischen Eigenschaften stehen und somit das Verarbeitungsverhalten direkt bestimmen.

Die Abhängigkeit der dynamischen Belastbarkeit von Polypropylenfolien von der Art ihres Kristallgefüges sowie dessen Beeinflussung durch technische Maßnahmen wie Streckung in verschiedene Richtungen, welche simultan oder stufenweise erfolgen kann und eine Orientierung der Molekülketten zur Folge hat, werden anschaulich in der EP-A-0 021 466 beschrieben, die es sich zum Ziel gesetzt hat, durch simultane, biaxiale Streckung (Orientierung) Folien aus Polypropylen mit bestimmten Werten für die Durchstoßfestigkeit (nach DIN 53 373) herzustellen.

Auch die DE-OS-2 528 370 beschreibt die Auswirkungen von simultaner und stufenweiser Streckung auf die Festigkeitseigenschaften von Polypropylenfolien.

Aufgabe der vorliegenden Erfindung ist es, aufbauend auf den im Stand der Technik festgehaltenen Erkenntnissen, eine Kunststoffolie aus Polyolefin herzustellen, insbesondere aus Polypropylen, welche verbesserte Festigkeitseigenschaften, insbesondere einen verbesserten Elastizitätsmodul in Längsrichtung aufweist.

Gelöst wird diese Aufgabe durch eine biaxial orientierte Kunststoffolie aus Polyolefin mit einem Zusatz eines natürlichen oder synthetischen Harzes, welches einen Erweichungspunkt von 70 bis 170°C besitzt, die dadurch gekennzeichnet ist, daß sie einen Elastizitätsmodul in Längsrichtung zwischen 4000 und 6000 N/mm² aufweist.

Erreicht wird diese erfindungsgemäße Eigenschaft durch ein Verfahren zur Herstellung der erfindungsgemäßen Folie durch Extrusion, anschließende Abkühlung auf einer Walze und darauf folgende biaxiale Orientierung, welche in mindestens drei Stufen erfolgt.

Harzmodifizierte Polyolefine bzw. daraus hergestellte Folien sind an sich z. B. aus den DE-ASn 2 146 393 und 2 428 462, der DE-PS-1 941 170 und der DE-OS-2 755 446 bekannt. Dort werden die Harzzusätze jedoch vorwiegend dazu benötigt, die Siegelfähigkeit zu verbessern oder den Schlupf zu erhöhen.

Es ist deshalb als ein besonders überraschendes Ergebnis anzusehen, daß die harzmodifizierten Polyolefinfolien bei der biaxialen Orientierung in drei Stufen, wobei zwei der Stufen ggf. auch simultan durchgeführt werden können, so überraschend hohe Elastizitätsmoduln aufweisen. Dies war umso überraschender, da dies bei Verwendung von nicht-modifizierten Polyolefinfolien nicht der Fall war.

Die eingesetzten "harten" Harze können sowohl natürlicher als auch synthetischer Art sein, wobei auch Mischungen zwischen diesen nicht ausgeschlossen sind. Die Harze sollen Erweichungspunkte zwischen 70 und 170°C, bevorzugt zwischen 80 und 140°C aufweisen.

Die Polyolefinkomponente besteht aus reinem Polypropylen oder aus einem Block- oder statistischen Copolymeren des Propylens mit wenigstens 5 % Copolymeranteil oder einer Mischung aus Polypropylen mit wenigstens 5 % eines anderen α-Olefins mit $C_n$ Kohlenstoffatomen, wobei n eine Zahl von 2 und 4 bis 10 bedeutet oder einer Mischung aus Polypropylen und einem Copolymeren.

Die zugesetzten Harze sind bevorzugt ein nichthydriertes Styrolpolymerisat, ein Methylstyrol-Styrol-Copolymerisat, ein Pentadien-Polymerisat, ein α- oder β-Pinen-Polymerisat, Kolophonium oder Kolophoniumderivat oder besonders bevorzugt Terpenpolymerisate sowie hydrierte Verbindungen hiervon sowie ein hydriertes α-Methylstyrol-Vinyltoluol-Copolymerisat. Von diesen Verbindungen können gegebenenfalls Mischungen von mehreren Harzen eingesetzt werden.

Wenn auch die Stärke der Folie an sich nicht begrenzt ist, so haben sich in der Praxis Stärken von 10 bis 60 µm, insbesondere von 15 bis 40 µm, besonders bewährt.

Eine besondere Ausführungsform der Erfindung stellt eine Folie dar, die neben ihrem erfindungsgemäß hohen Elastizitätsmodul außerdem mehrschichtig aufgebaut ist, wobei allerdings nicht alle Schichten unbedingt einen Zusatz von Harzen aufweisen müssen, sondern manche aus reinem Polyolefin bestehen können. Dieser mehrschichtige Aufbau der Folie kann durch die dem Fachmann geläufigen Coextrusionsverfahren bewerkstelligt werden.

In einer weiteren Ausführungsform der Erfindung liegt eine Polypropylenfolie vor, die neben ihrem erfindungsgemäß hohen Elastizitätsmodul außerdem eine ausgezeichnete Heißsiegelfähigkeit besitzt.

Diese Folie kann entweder durch Coextrusion des Polypropylens mit einem statistischen Copolymeren aus Propylen und Ethylen hergestellt werden, oder aber durch nachträgliche Beschichtung der vorgefertigten Polypropylenfolie mit dem statistischen Copolymeren. Die Zusammensetzung des statistischen Copolymeren beträgt hierbei 2 bis 20 Gew.-% Ethylenanteil, bezogen auf das Gesamtgewicht des Copolymeren, bevorzugt 4 bis 10 Gew.-%. Die nachträgliche Beschichtung kann aber auch mit reinem Polyethylen erfolgen.

Die Herstellung der erfindungsgemäßen Polyolefinfolien mit Harzzusatz erfolgt durch das bekannte Extrusionsverfahren. Hierbei wird das Polymere in einem Extruder verflüssigt und komprimiert. Die Schmelze wird dann in eine Breitschlitzdüse gepreßt und trifft auf eine Walze, auf welcher sie abgekühlt wird. Der so entstandene Polymerfilm wird dann bei Temperaturen unterhalb des Schmelzpunktes des eingesetzen

2

**0 079 520**

Polypropylens längs und quer zur Extrusionsrichtung (biaxial) gestreckt, wobei die Orientierung der Molkekülketten stattfindet und wodurch die Folie ihre Festigkeit erhält. Erfindungsgemäß findet diese Orientierung in mindestens drei Stufen statt, wobei zwei der Stufen ggf. auch simultan durchgeführt werden können. Die dreistufige Orientierung soll in der Reihenfolge

längs - quer - längs
längs - längs - quer
längs - simultan (längs/quer), oder
simultan (längs/quer) - längs

erfolgen. Besonders bevorzugt ist die Reihenfolge längs - quer - längs.

Es wird im allgemeinen zuerst in Längsrichtung der Bahn orientiert und dann quer dazu. Diese Reihenfolge wird deshalb so gewählt, weil im umgekehrten Fall die schon quer orientierte Folie auf der Längsorientierungsanlage stark einschrumpfen würde und die Anlage wesentlich breiter gebaut sein müßte, was einen erheblichen technischen Aufwand bedeuten würde und somit zu Teuerungen des Verfahrens führen würde.

Die erfindungsgemäße Folie läßt sich für zahlreiche Zwecke verwenden, insbesondere dort, wo hohe Festigkeit des Materials erforderlich ist.

Bevorzugt wird die Folie für Verpackungen verwendet, aber auch für andere bekannte technische Zwecke, z. B. als Isolationsmaterial in Kondensatoren. Einen besonderen Verwendungszweck der erfindungsgemäßen Folie stellt ihr Einsatz für Klebebänder dar.

**Beispiele:**

An den folgenden Beispielen wurden die MFI-Werte (melting-flow indices) der homopolymeren Polypropylene nach DIN 53 735 bei 230°C mit einem 5-kg-Gewicht gemessen. Für die Messungen der Werte in Tabelle 1 wurden Probestreifen einer Breite von 15 mm genommen. Alle auftretenden Kräfte wurden auf den Folienquerschnitt bezogen.

1. Zur Bestimmung von Reißfestigkeit und Reißdehnung wurde bei einer Einspannlänge von 100 mm eine Abzugsgeschwindigkeit von 100 mm/min. $\doteq$ 100 %/min. eingestellt. Die Dehnung wurde bis zum Bruch durchgeführt.

2. Zur Bestimmung des Elastizitätsmoduls wurde bei einer Einspannlänge von 200 mm eine Abzugsgeschwindigkeit von 20 mm/min $\doteq$ 10 %/min eingestellt. Die Dehnung wurde bis etwa 0,7 % durchgeführt.

**Beispiel 1**

Aus einem homopolymeren Polypropylen mit einem MFI von 8 g/10 min wird mit einer Schmelzetemperatur von ca. 260°C eine Vorfolie auf einer Abzugswalze mit ca. 30°C Oberflächentemperatur hergestellt, anschließend bei 135°C um den Faktor 6 längs- und nachfolgend bei 170°C um den Faktor 9 quergestreckt. Die mechanischen Eigenschaften der Folie entsprechend diesem Beispiel 1 sind in Tabelle 1 denen der Beispiele 2, 3 und 4 gegenübergestellt.

**Beispiel 2**

Eine Mischung aus einem homopolymeren PP mit einem MFI von 8 g/10 min (80 Teile) und einem Polyterpenharz mit einem Erweichungspunkt von 125°C (20 Teile) wird mit einer Schmelzetemperatur von ca. 260°C auf einer Abzugswalze mit ca. 30°C Oberflächentemperatur zu einer Vorfolie extrudiert und anschließend bei 135°C um den Faktor 6 längs und bei 170°C um den Faktor 9 quergestreckt. Die mechanischen Eigenschaften der Folie entsprechend diesem Beispiel 2 sind in Tabelle 1 denen der Beispiele 1, 3 und 4 gegenübergestellt.

**Beispiel 3**

Die Folie aus Beispiel 1 wird bei 155°C um den Faktor 1,6 nachlängsgestreckt. Die mechanischen Eigenschaften dieser Folie sind in Tabelle 1 denen der Beispiele 1, 2 und 4 gegenübergestellt.

3

**Beispiel 4**

Die Folie aus Beispiel 2 wird bei 160°C um den Faktor 1,6 nachlängsgestreckt. Die Eigenschaften dieser Folie entsprechend Beispiel 4 sind in Tabelle 1 denen der Beispiele 1 bis 3 gegenübergestellt.

**Tabelle 1**

| Folie | | Längs-E-Modul (N/mm$^2$) | Reißfestigkeit (N/mm$^2$) | Reißdehnung (%) |
|---|---|---|---|---|
| Bsp. | 1 | 2350 | 130 | 160 |
| | 2 | 3200 | 160 | 130 |
| | 3 | 3020 | 190 | 70 |
| | 4 | 4620 | 230 | 40 |

**Patentansprüche**

1. Biaxial orientierte Kunststoffolie aus Polypropylen mit einem Zusatz eines natürlichen oder synthetischen Harzes, welches einen Erweichungspunkt von 70 bis 170°C besitzt, dadurch gekennzeichnet, daß die Folie einen Elastizitätsmodul in Längsrichtung zwischen 4000 und 6000 N/mm$^2$ aufweist.

2. Folie nach Anspruch 1, dadurch gekennzeichnet, daß das zugesetzte Harz einen Erweichungspunkt von 80 bis 140°C aufweist.

3. Folie nach einem der Ansprüche 1 und 2, dadurch gekennzeichnet, daß die Polyolefinkomponente aus Polypropylen, einem Block- oder statistischen Copolymeren des Propylens mit wenigstens 5 % Copolymeranteil oder einer Mischung des Polypropylens mit wenigstens 5 % eines anderen α-Olefins mit C$_n$ Kohlenstoffatomen, wobei n eine Zahl von 2 und 4 bis 10 bedeutet oder einer Mischung aus Polypropylen und einem Copolymeren besteht.

4. Folie nach einem der Ansprüche 1 bis 3, dadurch gekennzeichnet, daß das zugesetzte Harz aus einem nichthydrierten Styrol-Polymerisat, aus einem α-Methylstyrol-Styrol-Copolymerisat, aus einem Pentadienpolymerisat, α-Pinen- oder β-Pinen-Polymerisaten, aus Terpenpolymerisaten, Kolophonium bzw. Kolophoniumderivaten oder hydrierten Verbindungen hiervon oder aus einem hydrierten α-Methylstyrol-Vinyltoluol-Copolymerisat, gegebenenfalls in Mischung besteht.

5. Folie nach einem der Ansprüche 1 bis 4, dadurch gekennzeichnet, daß das zugesetzte Harz in einer Menge von 1 bis 30, bevorzugt von 5 bis 20 Gew.-%, bezogen auf das Gesamtgewicht der Folie, vorliegt.

6. Folie nach einem der Ansprüche 1 bis 5, dadurch gekennzeichnet, daß die Folie mehrschichtig aufgebaut ist, wobei wenigstens eine Schichte einen Zusatz von Harz aufweist.

7. Folie nach einem der Ansprüche 1 bis 5, dadurch gekennzeichnet, daß die Folie heißsiegelfähig ist.

8. Folie nach einem der Ansprüche 1 bis 7, dadurch gekennzeichnet, daß die Foliendicke 10 bis 60, bevorzugt 15 bis 40 μm beträgt.

9. Verfahren zur Herstellung einer Folie nach einem der Ansprüche 1 bis 8 durch Extrusion, anschließende Abkühlung auf einer Walze und darauf folgende biaxiale Orientierung, dadurch gekennzeichnet, daß die Orientierung in mindestens drei Stufen erfolgt.

10. Verfahren nach Anspruch 9, dadurch gekennzeichnet, daß von den mindestens drei Orientierungsstufen zwei in Längsrichtung durchgeführt werden.

11. Verfahren zur Herstellung einer Folie nach Anspruch 7, dadurch gekennzeichnet, daß auf die Folie eine Beschichtung mit einem polyolefinischen, statistischen, siegelfähigen Copolymeren aufgebracht wird.

12. Verfahren zur Herstellung einer mehrschichtigen Folie nach Anspruch 6, dadurch gekennzeichnet, daß die verschiedenen Schichten, aus denen die Folie besteht, in einem Coextrusionsverfahren erzeugt werden.

13. Verwendung einer Folie nach einem der Ansprüche 1 bis 8 für Verpackungen oder technische Anwendungen.

14. Klebeband umfassend eine biaxial orientierte Kunststoffolie aus Polypropylen mit einem Zusatz eines natürlichen oder synthetischen Harzes, welches einen Erweichungspunkt von 70 bis 170°C besitzt, sowie wenigstens eine auf einer Oberfläche der Folie aufgebrachte Klebstoffbeschichtung, dadurch gekennzeichnet, daß die Folie einen Elastizitätsmodul in Längsrichtung zwischen 4000 und 6000 N/mm$^2$ aufweist.

15. Klebeband nach Anspruch 14, dadurch gekennzeichnet, daß die Polyolefinkomponente der Trägerfolie aus Polypropylen, einem Block- oder statistischen Copolymeren des Propylens mit wenigstens 5 % Copolymeranteil oder einer Mischung des Polypropylens mit wenigstens 5 % eines anderen α-Olefins mit C$_n$ Kohlenstoffatomen, wobei n eine Zahl von 2 und 4 bis 10 bedeutet, oder einer Mischung aus Polypropylen und einem Copolymeren besteht.

16. Klebeband nach Anspruch 14 oder 15, dadurch gekennzeichnet, daß das zugesetzte Harz aus einem nichthydrierten Styrol-Polymerisat, aus einem α-Methylstyrol-Styrol-Copolymerisat, aus einem Pentadienpolymerisat, α-Pinen- oder β-Pinen-Polymerisaten, aus Terpenpolymerisaten, Kolophonium bzw. Kolophoniumderivaten oder hydrierten Verbindungen hiervon oder aus einem hydrierten α-Methylstyrol-Vinyltoluol-Copolymerisat, gegebenenfalls in Mischung besteht.

**0 079 520**

17. Klebeband nach einem der Ansprüche 14 bis 16, dadurch gekennzeichnet, daß das zugesetzte Harz in einer Menge von 1 bis 30, bevorzugt von 5 bis 20 Gew.-%, bezogen auf das Gesamtgewicht der Trägerfolie, vorliegt.

18. Klebeband nach einem der Ansprüche 14 bis 17, dadurch gekennzeichnet, daß die Trägerfolie eine Reißfestigkeit von bis zu 230 N/mm² und eine Reißdehnung von 40 % und mehr aufweist.

**Claims**

1. Biaxially oriented plastic film made from polypropylene containing an additive comprising a natural or synthetic resin with a softening point of between 70 and 170°C, characterized in that the film has a modulus of elasticity of between 4,000 and 6,000 N/mm² in the longitudinal direction.

2. Film as claimed in claim 1, characterized in that the added resin has a softening point of between 80 and 140°C.

3. Film as claimed in any of claims 1 or 2, characterized in that the polyolefin component is comprised of polypropylene or of a block or random copolymer of polypropylene containing a copolymer proportion of at least 5 % or of a mixture of polypropylene and at least 5 % of another $\alpha$-olefin having $C_n$ carbon atoms, where n denotes 2 or a number from 4 to 10, or of a mixture of polypropylene and a copolymer.

4. Film as claimed in any of claims 1 to 3, characterized in that the added resin is comprised of a non-hydrogenated styrene polymer of an $\alpha$-methylstyrene/styrene copolymer, of a pentadiene polymer, of $\alpha$-pinene or $\beta$-pinene polymers, of terpene polymers, of colophony or colophony derivatives or hydrogenated compounds thereof or of a hydrogenated $\alpha$-methylstyrene/vinyl toluene copolymer or optionally of mixtures of several of these compounds.

5. Film as claimed in any of claims 1 to 4, characterized in that the added resin is present in an amount of 1 to 30 % by weight, preferably of 5 to 20 % by weight, relative to the total weight of the film.

6. Film as claimed in any of claims 1 to 5, characterized in that it is a multilayer film, with at least one layer containing a resin additive.

7. Film as claimed in any of claims 1 to 5, characterized in that it is a heat-sealable film.

8. Film as claimed in any of claims 1 to 7, characterized in that it has a thickness of 10 to 60 $\mu$m, preferably of 15 to 40 $\mu$m.

9. Process for producing a film as claimed in any of claims 1 to 8 by extrusion followed chilling on a roller and subsequent biaxial orienting, characterized in that orienting is performed in at least three stages.

10. Process as claimed in claim 9, characterized in that two of the at least three orienting stages are performed in the longitudinal direction.

11. Process for producing a film as claimed in claim 7, characterized in that a coating comprising a polyolefinic, random, sealable copolymer is applied to the film.

12. Process for producing a multilayer film as claimed in claim 6, characterized in that the various layers of which the film is comprised are produced by means of a coextrusion process.

13. Use of the film as claimed in any of claims 1 to 8 for wrappings or technical applications.

14. Adhesive tape comprised of a biaxially oriented plastic film made from polypropylene containing an additive comprising a natural or synthetic resin with a softening point of between 70 and 170°C, and of an adhesive coating applied to at least one surface of the film, characterized in that the film has a modulus of elasticity of between 4,000 and 6,000 N/mm².

15. Adhesive tape as claimed in claim 14, characterized in that the polyolefin component of the support film is comprised of polypropylene or of a block or random copolymer of polypropylene containing a copolymer proportion of at least 5 % or of a mixture of polypropylene and at least 5 % of another $\alpha$-olefine having $C_n$ carbon atoms, where n denotes 2 or a number from 4 to 10, or of a mixture of polypropylene and a copolymer.

16. Adhesive tape as claimed in claim 14 or 15, characterized in that the added resin is comprised of a non-hydrogenated styrene polymer of an $\alpha$-methylstyrene/styrene copolymer, of a pentadiene polymer, of $\alpha$-pinene or $\beta$-pinene polymors, of terpene polymers, of colophony or colophony derivatives or hydrogenated compounds thereof or of a hydrogenated $\alpha$-methylstyrene/vinyl toluene copolymer or optionally of mixtures of several of these compounds.

17. Adhesive tape as claimed in any of claims 14 to 16, characterized in that the added resin is present in an amount of 1 to 30 % by weight, preferably of 5 to 20 % by weight, relative to the total weight of the support film.

18. Adhesive tape as claimed in any of claims 14 to 17, characterized in that the support film has a tear strength of up to 230 N/mm² and an elongation of break of 40 % and more.

**Revendications**

1. Feuille de matière plastique orientée biaxialement en polypropylène avec une addition d'une résine naturelle ou synthétique, qui possède un point de ramollissement de 70 à 170°C, caractérisée en ce que la

5

feuille présente un module d'élasticité dans le sens longitudinal compris entre 4000 et 6000 N/mm².

2. Feuille suivant la revendication 1, caractérisée en ce que la résine ajoutée présente un point de ramollissement de 80 à 140°C.

3. Feuille suivant l'une des revendications 1 et 2, caractérisée en ce que le constituant polyoléfine se compose de polypropylène, d'un copolymère séquencé ou statistique du propylène avec une proportion d'au moins 5 % du copolymère ou d'un mélange du polypropylène avec au moins 5 % d'une autre α-oléfine ayant $C_n$ atomes de carbone, n désignant un nombre égal à 2 et de 4 à 10, ou d'un mélange de polypropylène et d'un copolymère.

4. Feuille suivant l'une des revendications 1 à 3, caractérisée en ce que la résine ajoutée se compose d'un polymère du styrène non hydrogéné, d'un copolymère α-méthylstyrène-styrène, d'un polymère du pentadiène, de polymères de l'α-pinène ou du β-pinène, de polymères terpéniques, de colophane ou de dérivés de la colophane ou de composés hydrogénés de ceux-ci, ou d'un copolymère α-méthylstyrène-vinyltoluène hydrogéné, le cas échéant en mélange.

5. Feuille suivant l'une des revendications 1 à 4, caractérisée en ce que la résine ajoutée est présente dans une quantité de 1 à 30, de préférence de 5 à 20 % en poids, par rapport au poids total de la feuille.

6. Feuille suivant l'une des revendications 1 à 5, caractérisée en ce que la feuille est construite en plusieurs couches, au moins une couche présentant une addition de résine.

7. Feuille suivant l'une des revendications 1 à 5, caractérisée en ce que la feuille est thermoscellable.

8. Feuille suivant l'une des revendications 1 à 7, caractérisée en ce que l'épaisseur de la feuille est de 10 à 60 μm, de préférence de 15 à 40 μm.

9. Procédé de fabrication d'une feuille suivant l'une des revendications 1 à 8 par extrusion, puis refroidissement sur un cylindre suivi d'une orientation biaxiale, caractérisé en ce que l'orientation s'effectue en au moins trois stades.

10. Procédé suivant la revendication 9, caractérisé en ce que parmi les trois stades au moins d'orientation, deux sont effectués dans le sens longitudinal.

11. Procédé de fabrication d'une feuille suivant la revendication 7, caractérisé en ce qu'on applique sur la feuille une enduction d'un copolymère polyoléfinique, statistique, scellable.

12. Procédé de fabrication d'une feuille multicouche suivant la revendication 6, caractérisé en ce que les diverses couches dont est constituée la feuille sont produites dans un procédé de coextrusion.

13. Utilisation d'une feuille suivant l'une des revendications 1 à 8 pour des emballages ou des applications techniques.

14. Ruban adhésif comprenant une feuille de matière plastique en polypropylène orientée biaxialement avec une addition d'une résine naturelle ou synthétique, qui possède un point de ramollissement de 70 à 170°C, ainsi qu'au moins une enduction d'adhésif appliquée sur une face de la feuille, caractérisé en ce que la feuille présente un module d'élasticité dans le sens longitudinal compris entre 4 000 et 6 000 N/mm².

15. Ruban adhésif suivant la revendication 14, caractérisé en ce que le constituant polyoléfine de la feuille de support se compose de polypropylène, d'un copolymère séquencé ou statistique du propylène avec une proportion d'au moins 5 % du copolymère ou d'un mélange du polypropylène avec au moins 5 % d'une autre α-oléfine avec $C_n$ atomes de carbone, n désignant un nombre égal à 2 et de 4 à 10, ou d'un mélange de polypropylène et d'un copolymère.

16. Ruban adhésif suivant les revendications 14 ou 15, caractérisé en ce que la résine ajoutée se compose d'un polymère du styrène non hydrogéné, d'un copolymère α-méthylstyrène-styrène, d'un polymere du pentadiène, de polymères de l'α-pinène ou du β-pinène, de polymères terpéniques, de colophane ou de dérivés de la colophane ou de composés hydrogénés de ceux-ci, ou d'un copolymère α-méthylstyrène-vinyltoluène hydrogéné, le cas échéant en mélange

17. Ruban adhésif suivant l'une des revendications 14 à 16, caractérisé en ce que la résine ajoutée est présente dans une quantité de 1 à 30, de préférence de 5 à 20 % en poids, par rapport au poids total de la feuille de support.

18. Ruban adhésif suivant l'une des revendications 14 à 17, caractérisé en ce que la feuille de support présente une résistance à la traction allant jusqu'à 230 N/mm² et un allongement à la rupture de 40 % et davantage.